(19) Europäisches Patentamt
European Patent Office
Office européen des brevets

(11) EP 4 124 635 A1

(12) EUROPEAN PATENT APPLICATION

(43) Date of publication:
**01.02.2023 Bulletin 2023/05**

(21) Application number: **21188852.4**

(22) Date of filing: **30.07.2021**

(51) International Patent Classification (IPC):
***C08K 3/00*** *(2018.01)* ***C08L 23/00*** *(2006.01)*
***C08L 53/00*** *(2006.01)* ***C08L 71/02*** *(2006.01)*
***C08L 71/12*** *(2006.01)* ***C08L 81/02*** *(2006.01)*

(52) Cooperative Patent Classification (CPC):
(C-Sets available)
**C08L 81/02; C08K 3/00; C08L 71/02; C08L 71/12**

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **SHPP Global Technologies B.V.**
**4612 PX Bergen op Zoom (NL)**

(72) Inventors:
- **SONG, Shijie**
**Shanghai (CN)**
- **JUNG, Jin Ju**
**13109 Gyeonggi-do (KR)**
- **LEE, Jong Woo**
**13109 Gyeonggi-do (KR)**

(74) Representative: **Dehns**
**St. Bride's House**
**10 Salisbury Square**
**London EC4Y 8JD (GB)**

# (54) PLATABLE POLY(PHENYLENE SULFIDE) AND POLY(PHENYLENE ETHER) COMPOSITIONS

(57) Disclosed herein are compositions comprising: a. from about 30 wt. % to about 60 wt. % of a polyphenylene sulfide (PPS); from greater than 20 wt. % to about 35 wt. % of a polyphenylene oxide (PPO); from about 0.01 wt. % to about 12 wt. % of a compatibilizer package; and from about 20 wt. % to about 50 wt. % of an inorganic filler, wherein the combined weight percent value of all components does not exceed 100 wt. %, and all weight percent values are based on the total weight of the composition, and wherein the composition exhibits a plating adhesion of at least 5B when tested in accordance with an ASTM D3359 cross hatch adhesion test.

EP 4 124 635 A1

(52) Cooperative Patent Classification (CPC): (Cont.)

C-Sets
**C08L 81/02, C08L 71/02;**
**C08L 81/02, C08L 71/12**

## Description

### FIELD OF THE DISCLOSURE

The present disclosure relates to materials comprising polyphenylene sulfide, and in particular to polyphenylene sulfide materials for certain plating applications.

### BACKGROUND

For a number of technical applications, there is a growing desire to replace metal components with polymer components especially to minimize overall component weight. One such metal is aluminum and a particular application is the replacement of aluminum in base station antenna/antenna dipole. While various metal and polymer substitutes for aluminum have been used, they can have properties that make them unsuitable for substitution in certain applications. Polyphenylene sulfide (PPS) may be a desirable polymer resin for such substitution applications including antennae because the resin is cost-effective with well-balanced mechanical, heat, and dielectric properties. However, molded parts comprising fiber-filled PPS based may exhibit diminished warpage and appearance as well as poor plating. There remains a need in the art for filled polyphenylene sulfide-based platable materials.

### SUMMARY

The above-described and other deficiencies of the art are met by thermoplastic compositions comprising from about 30 wt. % to about 60 wt. % of a polyphenylene sulfide (PPS); from greater than 20 wt. % to about 35 wt. % of a polyphenylene oxide (PPO); from about 0.01 wt. % to about 12 wt. % of a compatibilizer package; and from about 20 wt. % to about 50 wt. % of an inorganic filler, wherein the combined weight percent value of all components does not exceed 100 wt. %, and all weight percent values are based on the total weight of the composition. The composition may exhibit a plating adhesion of at least 5B when tested in accordance with an ASTM D3359 cross hatch adhesion test.

The above described and other features are exemplified by the following detailed description, examples, and claims.

### BRIEF DESCRIPTION OF THE FIGURES

The accompanying figures, which are incorporated in and constitute a part of this specification, illustrate several aspects and together with the description serve to explain the principles of the disclosure.

FIG. 1A shows a scanning electron microscope (SEM) image of a matrix polymer PPS with a dispersed PPO.
FIG. 1B shows a schematic diagram of the PPS and PPO.
FIG. 2 shows Table 1 presenting raw materials for inventive and comparative samples.
FIG. 3 shows Table 2 presenting the typical extrusion profile of compositions.
FIG. 4 shows Table 3 presenting the typical molding profile of compositions.
FIG. 5 shows Table 4 including the formulations for different PPS/PPO compounds.
FIG. 6 shows Table 7 presenting the plating values for formulations with varying molecular weight of PPS and PPE.
FIG. 7 shows Table 8 presenting plating properties for samples at 20, 25, and 30 wt. % PPE.
FIG. 8 shows images of Parts A and B in black (BK) and natural color (NC)
FIG. 9 presents an image of a molded parts Part A and Part B with 3-points gate.
FIG. 10 presents specific gravities of Parts A and B.
FIGS. 11A and 11B present graphical representations of dielectric constant Dk and dielectric loss Df as a function of temperature, respectively.
FIG. 12 presents images of trials of molded parts Part A and Part B for dart impact performance.

### DETAILED DESCRIPTION OF ILLUSTRATIVE EMBODIMENTS

The present disclosure may be understood more readily by reference to the following detailed description of desired embodiments and the examples included therein. In the following specification and the claims that follow, reference will be made to a number of terms which have the following meanings. Also, within the scope of the disclosure are articles of manufacture prepared according to any of the methods described herein. For example, articles that can be produced using the materials and methods of the disclosure include those in the electrical field, for example, computer, antenna and lighting articles.

Polyphenylene sulfide and poly(phenylene) ether-based compositions capable of plating processes are increasingly desirable. These materials may be particularly useful as plastic antenna dipole for 5G base station. Conventionally aluminum based antenna dipoles have been used for base station antenna because of the metal's long-term reliability with respect to dimensional stability, radio frequency performance, and generally robust adhesion with a plated layer. Aluminum antenna dipole are also desirable as they are solderable because of the metal's high heat resistance (namely, a heat deflection temperature HDT greater than 260 °C) and low CTE (coefficient of thermal expansion). However, weight reduction of certain industrial systems, including 5G base stations, is a key challenge of equipment manufacturers to reduce the final customer, telecommunication companies' investment. As such, a plastic antenna dipole may be a weight reduction solution. A filled polyphenylene sulfide (PPS) may be a desirable replacement composition for these applications because the resin is generally cost-effective with well-balanced mechanical, heat, and dielectric properties. Table A summarizes a selection of desirable properties of glass-filled PPS compared to aluminum.

Table A. Comparison of aluminum and glass-filled PPS.

| | **Aluminum** | **PPS (40% GF)** |
|---|---|---|
| **Tensile modulus (GPa)** | 69 | 16 |
| **CTE (ppm m/m °C)** | 21~24 | 20~40 |
| **Melting temp (°C)** | 600 | 280 |
| **Specific gravity (g/cm$^3$)** | 2.7 | 1.66 |

Filled PPS materials however may present their own shortcomings, particularly glass fiber-filled PPS materials may exhibit low dimensional stability (characterized by greater warpage) and poor surface appearance when compared to aluminum. As described further below, PPS is also generally chemically resistant which may hinder certain plating performance. Furthermore, combinations of PPS and a dispersed resin, such as polyphenylene ether PPO, have been developed, but do not achieve the dimensional stability, lower warpage, and lower weight that would be desirable in certain metal replacement applications.

Chinese Patent Application No. CN 108264767A discloses a nano mold technology (NMT) polyphenylene sulfide composition comprising PPS, PPO, a modified PPO, and glass fiber. These compositions however are configured for mechanical bonding via NMT and the formulations feature a catalyst. Chinese Patent Application No. CN 103013118A discloses compositions combining PPS and PPO but does not address plating performance. Moreover, examples feature iron powder and graphite as fillers, which are not suitable for certain electro and electroless plating applications.

Chinese Patent Application No. CN102977603B discloses alloy materials comprising PPS and PPO, toughening agents, and carbon fiber. Carbon fiber filled compounds however may not be useful for electro and electroless plating applications. Chinese Patent Application No. CN103788654A discloses alloy materials comprising PPS, PPO, glass fiber, carbon fiber, compatibilizer, and flexibilizer. These compositions however do not exhibit low warpage and high dimensional stability.

PPS based compositions of the present disclosure provide low warpage, high dimensional stability, low specific gravity, low dielectric properties, and good platability while maintaining mechanical properties and thermal resistance. This balance among properties may make these compositions useful for forming plastic antenna dipoles.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Various combinations of elements of this disclosure are encompassed by this disclosure, for example, combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of embodiments described in the specification.

***Thermoplastic Composition***

Aspects of the disclosure relate to thermoplastic composition comprising at least polyphenylene sulfide (PPS), a polyphenylene oxide PPO, a specific compatibilizer package, and an inorganic filler such as glass fiber.

The disclosed compositions may comprise a two-phase system which has sea and island structure featuring poly(phenylene sulfide) and poly(phenylene ether) as shown in the scanning electron microscope image shown in FIG. 1A. FIG. 1B is a characterization of the matrix polymer PPS with a dispersed polymer PPO (PPE) shown throughout. Table B. provides a comparative summary of various properties of PPS and PPE.

Table B. Comparison of PPS and PPE properties

| | Poly(phenylene sulfide) | Poly(Phenylene ether) |
|---|---|---|
| Melting temperature | About 285 - 300 °C | - |
| Glass transition temperature | 150 °C | 215 °C |
| Specific gravity | 1.36 g/ml | 1.06 g/ml |
| Dielectric constant | about 3 - 3.3 | 2.5 |
| | Polymer Matrix | Dispersed |

The disclosed compositions exhibit improved warpage, a reduced weight and dielectric constant compared to convention PPS. The polymer systems achieve enhanced adhesion between matrix polymer and plated metal Without wishing to be bound by any particular theory, PPO in the dispersed domain may be more easily etchable than PPS which has strong chemical resistance, thus etched PPO domain may improve physical adhesion of a plated metal layer at the disclosed composition.

In various aspects, the present disclosure provides composite materials useful for the manufacture of platable polyphenylene sulfide-based materials. These materials have been evaluated for warpage, heat deflection properties as well as mechanical performance. These materials exhibit certain plating properties. Compositions of the present disclosure are suitable for electroless plating as well as electroplating applications. Conventionally, to achieve sufficient plating performance at a substrate, a first etching or pretreatment process is required. Because of the stability and chemical resistance of conventional PPS based resins, a rigorous physical etching process (such as a sand blaster) is applied to a PPS material to facilitate plating. Physical etching may result in a rough surface and complicates part design. Chemical etching provides more design freedom as well as better surface quality. Compositions of the present disclosure eliminate the need for physical etching by enhancing the effect of chemical etching. Thus, platable thermoplastic compositions with robust electroless plating performance, dimensional stability, light weight, improved surface appearance without sacrificing heat resistance (specifically, a heat deflection temperature greater than 268 °C according to ISO 75, at 0.45 MPa) and impact performance (specifically, a Charpy impact strength greater than 6.5) have been developed based on the building blocks of PPS, PPO, a unique compatibilizer package, and glass fiber filler.

By combing glass filled PPS and PPO with a compatibilizer package, plating performance (particularly electroless plating performance) and warpage properties of the compositions were improved. Plating performance of the compositions is at least 5B according to a cross hatch adhesion test (ASTM D3359), indicating that the developed PPS based compound had very good plating performance.

***Polyphenylene Sulfide***

In various aspects, the disclosed composition may comprise a polyarylene sulfide, such as a polyphenylene sulfide (PPS). PPS may describe polymers containing optionally substituted phenyl rings linked with (S) and can be used interchangeably with poly (2,6 dimethyl-p-phenylene sulfide). Further, the disclosed composition may comprise a specific combination of PPO resins that provide the composition with a balance of certain properties.

The PPS polymer has at least 50 mol% of a recurring unit (1), relative to the total number of recurring units in the PPS polymer. In some aspects, the PPS polymer has at least 60 mol%, at least 70 mol%, at least 80 mol%, at least 90 mol%, at least 95 mol% or at least 99 mol% recurring unit, relative to the total number of recurring units in the PPS polymer. Recurring unit (1) is represented by the following formula:

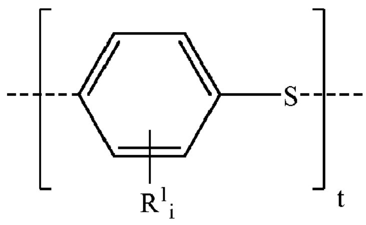
, (1)

where $R^1$, at each location, is independently selected from the group consisting of an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine; i is an integer from 0 to 4, preferably 0; and t is an integer greater than 50, preferably greater than 100. As used herein, a dashed bond indicates a bond to an atom outside the recurring unit. For example, the dashed bond can be a bond to an identical recurring unit, a different recurring unit, or an atom of a non-recurring unit (more specifically, an end-capper). The PPS polymer can include one or more additional recurring units (1). In such cases, each additional recurring unit may be distinct from each other and from another.

In various aspects, the PPS polymer may include a metal end-capping agent, including but not limited to, sodium end-capping agents. The sodium end-capping agents may be represented by a formula as shown below:

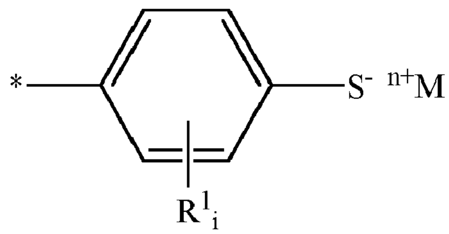

where M is Na and n is 2. A person of ordinary skill in the art will recognize that a PPS polymer includes many polymer chains having two chain ends (terminal ends). Accordingly, such chains can have 0 to 2 end-capping agents. End-capping agents with M as Na are referred to as sodium end-capping agents.

The polyphenylene sulfide may have a particular viscosity. In various aspects, the polyphenylene sulfide may have a high viscosity. High viscosity may be characterized as a melt volume rate less than less than 50 cubic centimeters per 10 minutes ($cm^3$/10 min.) at 300 °C/2.16 kg testing conditions when tested in accordance with ISO-1133.

The polyphenylene sulfide may have a particular molecular weight. In certain aspects, the polyphenylene sulfide may have a high molecular weight. More specifically, the polyphenylene sulfide may have a number average molecular weight $M_n$ greater than 40,000 Daltons. In yet further aspects, the polyphenylene sulfide may have a $M_n$ greater than 9,000 Daltons.

The disclosed polyphenylene sulfide may have certain endcapping groups. It was surprisingly found that PPS polymers, terminated with specific end-capping agents in specific amounts, had significantly improved melt stability. Because of the significantly improved melt stability, the PPS polymers can be advantageously incorporated into melt processing techniques.

Polyphenylene sulfide may be present in the disclosed compositions in an amount of about 30 wt. % % to about 70 wt. % based on the total weight of the composition. For example, polyphenylene sulfide may be present in the amount of 30 wt. % to 65 wt. %, 25 wt. % to 70 wt. %, 28 wt. % to 70 wt.%, 40 wt. % to 65 wt. %, 25 wt. % to 75 wt. %, 50 wt. % to 70 wt. %, or 30 wt. % to 75 wt. %.

***Polyphenylene Oxide***

In various aspects, the disclosed composition may comprise a polyphenylene ether such as polyphenylene oxide (a "poly(p-phenylene oxide") PPO. PPO may describe polymers containing optionally substituted phenyl rings linked with oxygen (O) and can be used interchangeably with poly(p-phenylene ether) or poly (2,6 dimethyl-p-phenylene oxide). Further, the disclosed composition may comprise a specific combination of PPO resins that provide the composition with a balance of certain properties. The polyphenylene oxide may be present as a polyphenylene oxide resin. In further aspects, the polyphenylene oxide may be present as a polyphenylene oxide copolymer.

Certain aspects of the composition include from greater than 20 wt. % to about 35 wt. % of a polyphenylene oxide or a polyphenylene oxide copolymer. Polyphenylene sulfide may be present in the disclosed compositions in an

amount of about 30 wt. % % to about 70 wt. % based on the total weight of the composition. For example, polyphenylene sulfide may be present in the amount of 21 wt. % to 35 wt. %, 25 wt. % to 35 wt. %, 28 wt. % to 35 wt.%, or 20 wt. % to 34 wt. %.

***Compatibilizer Package***

The compositions of the present disclosure also include a compatibilizer package. The compatibilizer package may comprise a specific combination of compatibilizer and/or impact modifiers configured for PPS or PPO resins. The compatibilizer may comprise any suitable combination of specific compatibilizer or impact modifiers. As used herein, compatibilizer, compatibilizing agent, or other derivatives, can refer to polyfunctional compounds that can interact with the varying components in a given polymer composition. The compatibilizer may be added to improve the miscibility among components such as the polymer resins and glass fiber.

In certain aspects, the compatibilizer package may comprise a specific combination of three compatibilizer or impact modifiers in a ratio of from about 2:1:2 to about 3:1:4. In a specific example, the compatibilizer package may comprise a specific combination of three compatibilizer or impact modifiers in a ratio of 2:1.5:2.

The compatibilizer package may comprise at least two of a functionalized polyolefin, a hydrogenated hydrocarbon, or an elastomer modified graft copolymer. In more specific aspects, the compatibilizer package comprises an ethylene-glycidyl methacrylate co-polymer, an alicyclic saturated hydrocarbon resin, and a styrene ethylene butylene styrene copolymer.

The functionalized polyolefin may comprise functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step. The compatibilizer of the present disclosure can include a modified or "functionalized" polyolefin. This refers to the presence of functional groups on the primary chain of the polyolefin. In an example, the compatibilizer of the disclosed resin composite can be copolymerized or grafted with a saturated or unsaturated monomer comprising epoxy, carboxyl, or an acid anhydride group. As such, the compatibilizer may comprise a maleated polyolefin.

The maleated polyolefin may feature structural characteristics that facilitate the specific blend of the polyamide base resin, glass fiber, and polyolefin-based color masterbatch disclosed herein. Generally, a maleated polyolefin polymer may comprise two functional domains: a polyolefin and a maleic anhydride domain. One skilled in the art might appreciate that the polyolefin domain, which may include, for example, a high density polyethylene HDPE or polypropylene, is able to interact with the non-polar polyolefin of the resin composite. The maleic anhydride domain is able to interact with the polar polyamide base resin. These maleated polyolefins are generally prepared by grafting maleic anhydride onto the polymer backbone of the desired polyolefin domain. Typically, the maleic anhydride may be grafted such that the resulting maleic anhydride functionalized polyolefin includes from 1 wt. % to 6 wt. %, or from about 1 wt. % to 6 wt. %, maleic anhydride. In some examples, the resulting maleic anhydride functionalized polyolefin may include from 0.5 wt. % to 2 wt. %, or from about 0.5 wt. % to about 2 wt. % maleic anhydride.

As a further example, and not to be limiting, the maleated polyolefin can include a maleic anhydride-grafted polyethylene copolymer. In yet further examples, the compatibilizer may include a maleic anhydride-grafted polyalphaolefin. Maleic anhydride-grafted polyolefins useful in the present disclosure may include maleic anhydride-grafted ethylene-propylene, maleic anhydride-grafted ethylene-propylene-diene terpolymer (MAH-g-EPDM), maleic anhydride-grafted ethylene-octene copolymer (MAH-g-POE), maleic anhydride-grafted ethylene-butene copolymer (MAH-g-EBR), maleic anhydride-grafted ethylene-acrylic ester copolymer (MAH-g-EAE) or some combination thereof. In a specific example, the maleated polyolefin may comprise a maleated ethylene propylene copolymer having a flowrate of 22 grams per 10 minutes (g/10 min) when tested in accordance with ASTM D1238 and ISO 1133 at 230 °C and 10 kilogram (kg). In a specific example, the functionalized polyolefin may comprise ethylene glycidyl methacrylate copolymer.

Hydrogenated hydrocarbon resins may generally refer compounds of carbon and hydrogen, particularly comprising unsaturated C5 to C9 monomers. Hydrogenated hydrocarbon as used herein may also refer to aliphatic (C5), aromatic (C9), dicyclclopentadiene (DCPD) based low molecular weight, amorphous polymers. Low molecular weight in this context may be characterized as a molecular weight Mn of up to 5,000 g/mol. C5 aliphatic resins may generally describe polymers having monomers with five carbons while C9 aromatic hydrogenated hydrocarbons are generally polymers of nine-carbon aromatic monomers. Non-limiting examples for the monomers include cyclic olefins and diolefins, for example, cyclopentene, cyclopentadiene, cyclohexene, cyclohexadiene, methyl cyclopentadiene and the like; and cyclic diolefins, e.g., dicyclopentadiene, methylcyclopentadiene dimer and the like. The resins can additionally be partially or fully hydrogenated.

In certain aspects, the hydrogenated hydrocarbon may comprise an alicyclic saturated hydrocarbon resins are used having the following structure:

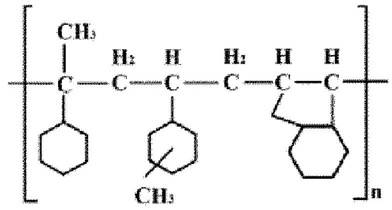

The alicyclic saturated hydrocarbon resin with the foregoing structural unit may have a polymerization degree n of from 2 to 8. Such resins are, for example, available from Arakawa Chemical Industries, under the tradename Arkon™, having a number average molecular weight of about 1150 g/mol, determined by GPC method. The softening point of the hydrogenated hydrocarbon may be from about 70 °C and 150 °C, measured according to ASTM E28-67. As a specific example, the disclosed hydrogenated hydrocarbon may comprise an alicyclic saturated hydrocarbon resin commercially available Arkon™ P-125, having a number average molecular weight $M_n$ of 1150 g/mol (according to GPC methods), a softening point of 125 °C when tested in accordance with ASTM E-28, and a molten viscosity of 2300 mPa·s at 180 °C when tested in accordance with ASTM D-3236.

The elastomer-modified graft copolymer may comprise a styrene-rubber copolymer. Styrene rubber copolymers may include styrene-butadiene-styrene (SBS), styrene-butadiene rubber (SBR), styrene-ethylene-butadiene-styrene (SEBS), styrene ethylene propylene styrene (SEPS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). An example SEBS impact modifier is high flow SEBS with a melt flow index that is greater than 3 g / 10 min at 230°C / 5 kg when tested in accordance with ISO-1133.

As noted above, in certain examples the resin composite disclosed herein includes from 0.01 wt. % to 12 wt. %, or from about 0.1 wt. % to about 10 wt. % of the compatibilizer package. In other examples, the resin composite includes from 0.1 wt. % to 12 wt. % of the compatibilizer package, or from 0.1 wt. % to 10 wt. % of the compatibilizer package, the resin composite includes from about 0.1 wt. % to about 8 wt. % of the compatibilizer package, or from about 2 wt. % to about 12 wt. % of the compatibilizer package, or from about 3 wt. % to about 10 wt. % of the compatibilizer package, or from about 2 wt. % to about 10 wt. % of the compatibilizer package, or even from about 2 wt. % to about 8 wt. % of the compatibilizer package.

***Inorganic Filler***

The present compositions may comprise an inorganic filler or reinforcing agent. The specific composition of filler, if present, can vary, provided that the filler is chemically compatible with the remaining components of the thermoplastic composition.

Suitable inorganic fillers may comprise, but are not limited to, metal silicates and silica powders; boron-containing oxides of aluminum (Al), magnesium (Mg), or titanium (Ti); anhydrous or hydrated calcium sulfate; wollastonite; hollow and/or solid glass spheres; kaolin; single crystal metallic or inorganic fibers or "whiskers"; glass fibers (including continuous and chopped fibers, including flat glass fibers) ; sulfides of molybdenum (Mo) or zinc (Zn); barium compounds; metals and metal oxides; flaked fillers; fibrous fillers; short inorganic fibers reinforcing organic fibrous fillers formed from organic polymers capable of forming fibers (e.g., polyether ether ketone (PEEK), polyetherimide (PEI), polytetrafluoroethylene (PTFE), polyphenylene sulfide (PPS)); and fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composite may comprise a glass fiber filler. In yet further aspects, the composite may be free or substantially free of a glass filler. In one aspect, the composition comprises an inorganic filler selected from glass fiber, glass flake, talc, clay, mica, wollastonite, titanium dioxide, or a combination thereof.

In a yet further aspect, the inorganic filler comprises a glass fiber, wherein the glass fiber has a cross section that can be round or flat. In another aspect, the glass fiber, for example, may be Jushi flat glass fiber, CSG3PA820. In an even further aspect, the glass bead has a cross section that is round or flat. In a further aspect, the glass fiber included in the glass fiber component is selected from E-glass, S-glass, AR-glass, T-glass, D-glass and R-glass. In a still further aspect, the glass fiber is selected from E-glass, S-glass, and combinations thereof. In a still further aspect, the glass fiber is one or more S-glass materials. High-strength glass is generally known as S-type glass in the United States, R-glass in Europe and T-glass in Japan. S-glass was originally developed for military applications in the 1960s, and a lower cost version, S-2 glass, was later developed for commercial applications. High-strength glass has appreciably

higher amounts of silica oxide, aluminum oxide and magnesium oxide than E-glass. S-2 glass is approximately 40-70% stronger than E-glass. The glass fibers can be made by standard processes, e.g., by steam or air blowing, flame blowing, and mechanical pulling. Exemplary glass fibers for thermoplastic compositions of the present disclosure may be made by mechanical pulling.

The glass fibers may be sized or unsized. Sized glass fibers are coated on their surfaces with a sizing composition selected for compatibility with the polymeric base resin. The sizing composition facilitates wet-out and wet-through of the polymeric base resin upon the fiber strands and assists in attaining desired physical properties in the thermoplastic composition.

In various further aspects, the glass fiber is sized with a coating agent. In a further aspect, the coating agent is present in an amount from 0.1 wt. % to 5 wt. %, or from about 0.1 wt. % to about 5 wt. % based on the weight of the glass fibers. In a still further aspect, the coating agent is present in an amount from about 0.1 wt. % to about 2 wt. % based on the weight of the glass fibers.

In preparing the glass fibers, a number of filaments can be formed simultaneously, sized with the coating agent and then bundled into what is called a strand. Alternatively the strand itself may be first formed of filaments and then sized. The amount of sizing employed is generally that amount which is sufficient to bind the glass filaments into a continuous strand and ranges from 0.1 wt. % to 5 wt. %, or from about 0.1 to about 5 wt. %, from 0.1 wt. % to 2 wt. % or from about 0.1 to 2 wt. % based on the weight of the glass fibers. Generally, this may be 1.0 wt. % or about 1.0 wt. % based on the weight of the glass filament.

In a further aspect, the glass fiber can be continuous or chopped. In a still further aspect, the glass fiber is continuous. In yet a further aspect, the glass fiber is chopped. Glass fibers in the form of chopped strands may have a length of 0.3 millimeter (mm) to 10 centimeters (cm) or about 0.3 mm to about 10 cm, specifically 0.5 millimeter (mm) to 5 cm or about 0.5 mm to about 5 cm, and more specifically 1 mm to 2.5 cm, or about 1.0 millimeter to about 2.5 centimeters. In various further aspects, the glass fiber has a length from 0.2 mm to 20 mm or about 0.2 mm to about 20 mm. In a yet further aspect, the glass fiber has a length from 0.2 mm to 10 mm, or from about 0.2 mm to about 10 mm. In an even further aspect, the glass fiber has a length from 0.7 mm to 7 mm, or from about 0.7 mm to about 7 mm. In this area, where a thermoplastic resin is reinforced with glass fibers in a composite form, fibers having a length of 0.4 mm or about 0.4 mm are generally referred to as long fibers, and shorter ones are referred to as short fibers. In a still further aspect, the glass fiber can have a length of 1 mm or longer. In yet a further aspect, the glass fiber can have a length of 2 mm or longer.

In various further aspects, the glass fiber has a round (or circular), flat, or irregular cross-section. Thus, use of non-round fiber cross sections is possible. In a still further aspect, the glass fiber has a circular cross-section. In yet further aspect, the diameter of the glass fiber is from 1 micrometer (micron, $\mu$m) to 15 $\mu$m, or from about 1 $\mu$m to about 15 $\mu$m. In an even further aspect, the diameter of the glass fiber is from 4 $\mu$m to 10 $\mu$m or from about 4 $\mu$m to about 10 $\mu$m. In a still further aspect, the diameter of the glass fiber is from 1 $\mu$m to 10 $\mu$m or from about 1 to about 10 $\mu$m. In a still further aspect, the glass fiber has a diameter from 7 $\mu$m to 10 $\mu$m or from about 7 $\mu$m to about 10 $\mu$m.

As provided above, glass fiber having a flat cross-section may be used. A flat glass fiber may have an aspect ratio for the flat cross-section of 2 to 5 or from about 2 to about 5. For example, the flat cross-section glass may have a flat ratio of 4:1.

In some aspects, the glass fiber component is present in an amount from greater than 0 wt. % to 60 wt. % or from greater than 0 wt. % to about 60 wt. %. In further aspects, the glass fiber component is present in an amount from 10 wt. % to 60 wt. % or from about 10 wt. % to about 60 wt. %, or from 20 wt. % to 60 wt. % or from about 20 wt. % to about 60 wt. %, or from 20 wt. % to 50 wt. %, or from about 20 wt. % to about 50 wt. %, or from 20 wt. % to 40 wt. % or from about 20 wt. % to about 40 wt. %.

The inorganic filler can be present in the polymer composition in an amount in the range of from about 2 wt. % to 50 wt. %, from about 5 wt. % to about 45 wt. %, from about 20 wt. % to about 50 wt. %, or from about 15 wt. % to about 45 wt. %, 10 wt. % to about 50 wt. % filler. In an aspect, the composition comprises from about 10 wt. % to 50 wt. % glass fiber.

### *Additives*

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. The total amount of all of the additives in the resin composition can be, for example, 0.001 to 12 wt% each based on the total weight of the composition. Suitable additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

According to certain aspects, the polymer compositions may maintain mechanical performance and dielectric strength even with high levels of fillers (for example, greater than 30 wt. % filler based on the total weight of the polymer composition).

The composite disclosed herein can comprise one or more additional fillers. The filler can be selected to impart additional impact strength and/or provide additional characteristics that can be based on the final selected characteristics of the polymer composition. In certain aspects, the composite may comprise a glass fiber filler. In yet further aspects, the composite may be free or substantially free of a glass filler.

Additional appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated, or surface treated, with silanes for example, to improve adhesion and dispersion with the polymer matrix. Fillers generally can be used in amounts of 1 to 200 parts by weight, based on 100 parts by weight of based on 100 parts by weight of the total composition.

The additive composition can include a flow modifier, reinforcing agent, antioxidant, heat stabilizer, light stabilizer, ultraviolet light stabilizer, ultraviolet absorbing additive, plasticizer, lubricant, release agent, antistatic agent, anti-fog agent, antimicrobial agent, chain extender, colorant, de-molding agents, flow promoter, flow modifier, surface effect additive, radiation stabilizer, flame retardant, anti-drip agent, or any combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS™ 168. Heat stabilizers are generally used in amounts of 0.01 to 5 wt%, based on the total weight of polymer in the composition.

There is considerable overlap among plasticizers, lubricants, and mold release agents, which include, for example, glycerol tristearate (GTS), phthalic acid esters (e.g., octyl-4,5-epoxy-hexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), waxes (e.g., beeswax, montan wax, paraffin wax, or the like), or combinations comprising at least one of the foregoing plasticizers, lubricants, and mold release agents. These are generally used in amounts of 0.01 to 5 wt%, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4- phenylene)bis(4H-3,1-benzoxazin-4-one, commercially available under the trade name CYASORB™ UV-3638 from Cytec Industries Inc., Woodland, NJ), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB™ 5411 from Cytec Industries Inc., Woodland, NJ) or combinations comprising at least one of the foregoing light stabilizers. The UV stabilizers can be present in an amount of 0.01 to 1 wt%, specifically, 0.1 to 0.5 wt%, and more specifically, 0.15 to 0.4 wt%, based upon the total weight of polymer in the composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis [3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Inorganic flame retardants can also be used, for example salts of C1-16 alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, inorganic flame retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The resin compositions can be formed by techniques known to those skilled in the art. Extrusion and mixing techniques, for example, may be utilized to combine the components of the resin composition.

The resin compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230 °C and about 350 °C in the molten resin composition, although higher temperatures can be used provided that the residence time of the resin in the processing equipment is kept short. In some aspects the melt processed composition exits processing equipment such as an extruder through small exit holes in a die. The resulting strands of molten resin are cooled by passing the strands through a water bath. The cooled strands can be chopped into small pellets for packaging and further handling.

Compositions may be manufactured by various methods, including batch or continuous techniques that employ kneaders, extruders, mixers, and the like. For example, the composition can be formed as a melt blend employing a twin-screw extruder. In some aspects at least some of the components are added sequentially. For example, the poly(arylene ether) component, the polystyrene component(s), and the impact modifier component can be added to the extruder at the feed throat or in feeding sections adjacent to the feed throat, or in feeding sections adjacent to the feed throat, while the filler component can be added to the extruder in a subsequent feeding section downstream. Alternatively, the sequential addition of the components may be accomplished through multiple extrusions. A composition may be made by preextrusion of selected components, such as the poly(arylene ether) component, the polystyrene component(s), and the impact modifier component to produce a pelletized mixture. A second extrusion can then be employed to combine the preextruded components with the remaining components. The filler component can be added as part of a masterbatch or directly. The extruder can be a two lobe or three lobe twin screw extruder.

In one aspect, the present disclosure pertains to plastic components, for example, that have been shaped, formed, or molded at least in part from the compositions described herein. Also provided are plastic components comprising a resin composition that is formed according to the presently disclosed methods for forming a resin composition.

***Properties and Articles***

In various aspects, the disclosed compositions may exhibit low warpage, high dimensional stability, low specific gravity, and low dielectric properties. The compositions may also be readily plated without sacrificing mechanical properties and thermal resistance.

The disclosed compositions comprising a poly(phenylene sulfide)(PPS) and poly(phenylene ether)(PPO) blend composition with specific compatibilizers and impact modifiers may exhibit improved dimensional stability(lower warpage), better physical appearance of molded part, a lower dielectric constant, and a lower density compared to neat PPS compositions or PPS compositions in the absence of the PPO and compatibilizers. The disclosed compositions achieve the foregoing properties without sacrificing heat resistance and impact performance of conventional PPS. The disclosed compositions are particularly desirable for plating processes (such as electroless plating) as they demonstrate improved

chemical etching, thereby also providing enhanced adhesion of chemically plated metal layers when compared to conventional PPS. Thus, the disclosed compositions and articles formed therefrom may be useful as replacements for metal or ceramic used for electronic applications which require solderability, stable dimension and dielectric properties, especially for plastic antenna dipole for 5G base stations.

As provided herein, the disclosed two phase system comprising a matrix PPS and dispersed PPO may exhibit a high thermal stability up to 265 °C while maintaining mechanical properties comparable to PPS. These compositions may also achieve enhanced adhesion of plated metal layer and reduced weight and dielectric properties, which may be attributed to the dispersed PPO.

In certain aspects, the disclosed composites may exhibitplating performance properties. A molded article or plaque comprising the composition may exhibit a plating adhesion of at least 5B when tested in accordance with an ASTM D3359 cross hatch adhesion test. In further aspects, this plating performance improves upon that of a substantially similar reference PPS composition in the absence of the PPO and/or compatibilizer package.

The disclosed compositions further exhibit high heat resistance, high flowability, and improved ductility. The compositions may exhibit a high heat resistance characterized by a heat deflection temperature of greater than 270 °C at 0.45 megapascals (MPa) or greater than 250 °C at 1.8 MPa, when tested in accordance with ISO 75. The compositions may exhibit a reduced specific gravity, namely less than 1.7 g/cm$^3$ when tested in accordance with ISO-1183. Further, the compositions may exhibit improved ductility which may be characterized by a Charpy impact strength greater than 6.5 KJ/m$^2$, greater than 7 KJ/m$^2$ when tested in accordance with ISO 180.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. The compositions may be useful for as well as electrically conducting materials.

In various aspects, the present disclosure provides composite materials useful for the manufacture of plastic antenna dipole for base stations. As noted herein, these antenna dipole is generally comprised of aluminum. Given the properties of the disclosed compositions herein, these materials may provide desirable substitutes for aluminum- (or other metal-) based base station antenna dipole. The disclosed materials maintain the dielectric properties of conventional PPS, such as dissipation factor Df, among others, at frequencies from about 10 GHz and 120 GHz. Furthermore, the temperature dependence of the dielectric properties was observed to be generally consistent with that of conventional PPS compositions. The disclosed compositions may be useful as a dielectric plate for a phase shifter for a 5G base station.

The advantageous characteristics of the compositions disclosed herein make them appropriate for an array of uses.

**Methods of Manufacture**

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (for example, the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in

order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Methods may further comprise processing the composite to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite.

Various combinations of elements of this disclosure are encompassed by this disclosure, for example, combinations of elements from dependent claims that depend upon the same independent claim.

## Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B,

and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, degree of polymerization, n, may describe the number of monomeric units (or repeating units) in a given polymer molecule.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

In one aspect, "substantially free of' can be less than about 0.5 weight percent (wt.%). In another aspect, substantially free of can be less than about 0.1 wt.%. In another aspect, substantially free of can be less than about 0.01 wt.%. In yet another aspect, substantially free of can be less than about 100 ppm. In yet another aspect, substantially

free can refer to an amount, if present at all, below a detectable level. In one aspect, the compositions of the present disclosure are free of or substantially free of carbon filler or carbon-based filler.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Aspects of the Disclosure**

In various aspects, the present disclosure pertains to and includes at least the following aspects.

Aspect 1. A thermoplastic composition comprising: from about 30 wt. % to about 60 wt. % of a polyphenylene sulfide (PPS); from greater than 20 wt. % to about 35 wt. % of a polyphenylene oxide (PPO); from about 0.01 wt. % to about 12 wt. % of a compatibilizer package; and from about 20 wt. % to about 50 wt. % of an inorganic filler, wherein the combined weight percent value of all components does not exceed 100 wt. %, and all weight percent values are based on the total weight of the composition, and wherein the composition exhibits a plating adhesion of at least 5B when tested in accordance with an ASTM D3359 cross hatch adhesion test.

Aspect 2.The thermoplastic composition of aspect 1, wherein the composition comprises from greater than 20 wt. % to about 30 wt. % of the PPO.

Aspect 3.The thermoplastic composition of any one of aspects 1-2, wherein the composition comprises from about 0.01 wt. % to about 8 wt. % of the compatibilizer package.

Aspect 4.The thermoplastic composition of any one of aspects 1-3, wherein the composition comprises from about 30 wt. % to about 45 wt. % of an inorganic filler.

Aspect 5.The thermoplastic composition according to any one of aspects 1-4, wherein the compatibilizer package comprises two or more impact modifiers or compatibilizers configured for PPS and PPO.

Aspect 6.The thermoplastic composition according to any one of aspects 1-5, wherein the compatibilizer package comprises at least two of a functionalized polyolefin, a styrene-rubber copolymer (SEBS), and an alicyclic saturated hydrocarbon resin.

Aspect 7.The thermoplastic composition according to any one of aspects 1-5, wherein the compatibilizer package comprises an ethylene-glycidyl methacrylate co-polymer, an alicyclic saturated hydrocarbon resin, and a styrene ethylene butylene styrene copolymer.

Aspect 8. The thermoplastic composition according to any one of aspects 1-5, wherein the compatibilizer package comprises an ethylene-glycidyl methacrylate co-polymer, an alicyclic saturated hydrocarbon resin, and a styrene rubber copolymer present in a ratio of about 2 : 1.5 : 2.

Aspect 9. The thermoplastic composition according to any one of aspects 1-8, wherein the PPS is a linear PPS.

Aspect 10. The thermoplastic composition according to any one of aspects 1-9, wherein the composition is free of or substantially free of a carbon filler or a carbon-based filler.

Aspect 11. The thermoplastic composition according to any one of aspects 1-10, wherein the composition is free of or substantially free of a laser activatable metal compound.

Aspect 12. The thermoplastic composition according to any one of aspects 1-11, wherein the inorganic filler comprises glass fiber, glass flake, talc, clay, mica, wollastonite, titanium dioxide, or a combination thereof.

Aspect 13. The thermoplastic composition according to any one of aspects 1-12, wherein the inorganic filler comprises a glass fiber.

Aspect 14. The thermoplastic composition according to any one of aspects 1 to 13, wherein the thermoplastic composition further comprises at least one additional additive, wherein the at least one additional additive comprises an acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof.

Aspect 15. An article comprising the thermoplastic composition according to any one of aspects 1 to 14.

Aspect 16. The article according to claim 15, wherein the article is an antenna, and the thermoplastic composition comprise: from about 30 wt. % to about 60 wt. % of a polyphenylene sulfide (PPS); from greater than 20 wt. % to about 35 wt. % of a polyphenylene oxide (PPO); from about 0.01 wt. % to about 12 wt. % of a compatibilizer package; and from about 20 wt. % to about 50 wt. % of an inorganic filler, wherein the combined weight percent value of all components does not exceed 100 wt. %, and all weight percent values are based on the total weight of the composition, and wherein the composition exhibits a plating adhesion of at least 5B when tested in accordance with ASTM D3359 cross hatch adhesion test.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

Various PPS resins were prepared from the raw materials presented in Table 1 (shown in FIG.2). The PPS and PPO resins vary according to molecular weight. Formulations were prepared according to the extrusion conditions shown in Table 2 (shown in FIG. 3). Molding conditions are presented in Table 3 (shown in FIG. 4).

Formulations comprising PPS, PPO, and a compatibilizer package were prepared to evaluate improvement in the adhesion of a metal layer applied via a chemical plating process on a molded part formed from the composition. Formulations are presented in Table 4 (shown in FIG. 5).

Formulations were evaluated for the following properties: heat distortion temperature (HDT), according to ISO 75, 0.45 MPa; tensile modulus, according to ISO 527; and impact strength, according to Charpy impact test. Plating performance was evaluated after a chemical plating process of etching, pretreatment, nickel plating (5 μm), and copper (10 μm). Plating performance was evaluated via a cross hatch adhesion test (ASTM D3359). A rating of 5B is indicated as "OK" and 0B to 4B is "Fail."

***Effect of PPS and PPE molecular weight.*** Adhesion of chemical plating was expected to be improved by two phase morphology. Generally, the morphology of two phase system can be controlled by the molecular weight of PPS and PPE. However, varying the PPS or PPE molecular weight did not improve or alter the adhesion of chemically plated metal layer meaningfully as shown in Table 7 (shown in FIG. 6). Using PPS and PPE of varying molecular weight (low and high) did not appear to affect plating performance.

***Effect of PPE content.*** Table 8 (shown in FIG. 7) presents the properties observed for samples at 20, 25, and 30 wt. % PPE. As the PPE content increased, adhesion of the plated layer increases and achieved 5B at 25% PPE content as shown in Table 8.

***Effect of impact modifier.*** Table 9 presents the properties observed for samples having varying amounts and variations of the compatibilizer package (IM1-IM3). For improving moldability without sacrificing platability, some part of PPE was substituted by impact modifier (IM). Samples 9 and 16 exhibited both good moldability and platability (ability to be plated). These results suggested modulus and impact performance could be tuned by varying the composition.

**Table 9.** Properties for varying amounts of compatibilizer package.

| Sample | PPS | PPE | IM | GF | HDT (°C) | TM (GPa) | Charpy (kJ/$m^2$) | Plating |
|---|---|---|---|---|---|---|---|---|
| 1 | 38.2 | 10 | 7.5 | 40 | 271 | 11.7 | 9.3 | Fail |
| 3 | 40.2 | 12 | 8.5 | 35 | 270 | 9.7 | 8.7 | Fail |
| 5 | 38 | 12.7 | 5 | 43 | 277 | 13.5 | 7 | Fail |
| 9 | 32.5 | 20 | 3.5 | 42 | 269 | 13.3 | 6.8 | OK |
| 16 | 32.9 | 20 | 3.5 | 41 | 271 | 12.9 | 9.5 | OK |

Further performance properties were evaluated on a comparative molded part formed from a reference composition comprising 100% PPS (referred to as Part A) against Sample 16 (referred to as Part B), for which the base polymer was 60% PPS and 40% PPO.

***Warpage.*** Molded part flatness was evaluated for Part A and Part B. Samples of each composition were prepared. Part A was prepared with black colorants (denoted BK) as well as natural color (NC). Part B was prepared in natural color only. FIG. 8 shows an image of Part A (A-BK), Part A (A-NC), and Part B (NC). The difference in color of the Part A specimens did not appear to affect warpage of the specimen. As shown, Part B-NC appeared much flatter than both the Part A-BK and Part A-NC specimens. The warpage improvement is quantified in Table 10. The evaluate warpage, the distance of a raised portion of the molded part from a planar surface was measured. As shown in Table

10, Part B-NC exhibited the smallest values for distance.

**Table 10. Warpage for Parts A and B**

| | Height difference at three points | | | Warpage |
|---|---|---|---|---|
| A - BK | 3.048 | 8.299 | 5.124 | 5.490 |
| A - NC | 3.976 | 7.761 | 5.638 | 5.792 |
| B - NC | 1.484 | 1.447 | 1.444 | 1.458 |

***Molding Defect.*** In order to compare weld line and flow mark, a mold design with three gates was chosen and is shown in FIG. 9 for Part A and Part B. From a visual inspection, Part A exhibited far more flow marks and weld line defects than Part B.

***Specific Gravity.*** As noted herein, it would be desirable to have a lower weight plastic component to utilize in base station equipment. Parts A and B were evaluated for specific gravity. The specific gravity of composition B was about 9% smaller than that of reference A. (A: 1.66, B: 1.51). Actual part weight for the mold design shown in FIG. 9 showed that Part B was about 8% lighter than reference Part A (specifically: 8.65 g, B: 7.99 g) as shown in FIG. 10.

***Dielectric properties.*** Dielectric constant (Dk) and dissipation factor (Df) at fixed frequencies (5.1 GHz) were tested on molded samples using a split post dielectric resonator (SPDR) and network analyzer. The dielectric constant of composition B was lower than reference A and the dielectric loss was comparable as shown in Table 11. As the Dk value decreases, the movement of electron in the circuit increases.

**Table 11.** Dielectric properties for Part A and Part B at 5.1 GHz.

| | Dk | Df |
|---|---|---|
| **A** | 4.2 | 0.0054 |
| **B** | 3.7 | 0.0056 |

Dielectric properties may depend on the operating temperature. A more stable Dk, Df value with varying temperature is benefit for the design of an antenna dipole for electronic/infrastructure application. Composition B had a lower Dk for the measured temperature range (- 40 °C to 100 °C). The observed Df value was similar to that of reference Part A through this temperature range. Temperature dependency of both Part A and B were comparable as shown in FIG. 11A (dielectric constant, Dk) and FIG. 11B (dielectric loss, Df).

***Impact Strength.*** Charpy impact performance Part A and Part B are comparable at A: 10 kJ/$m^2$ and B: 9.5 kJ/$m^2$. Dart impact performance using molded parts are also visibly consistent as shown in FIG. 12.

Overall, the PPS/PPO molded part exhibited improved warpage (or dimensional stability) as well as platability while maintaining excellent dielectric performance, high heat properties, and balanced mechanical performance.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with

insubstantial differences from the literal languages of the claims. It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

## Claims

**1.** A thermoplastic composition comprising:

a. from about 30 wt. % to about 60 wt. % of a polyphenylene sulfide (PPS);
b. from greater than 20 wt. % to about 35 wt. % of a polyphenylene oxide (PPO);
c. from about 0.01 wt. % to about 12 wt. % of a compatibilizer package; and
d. from about 20 wt. % to about 50 wt. % of an inorganic filler,

wherein the combined weight percent value of all components does not exceed 100 wt. %, and all weight percent values are based on the total weight of the composition, and
wherein the composition exhibits a plating adhesion of at least 5B when tested in accordance with an ASTM D3359 cross hatch adhesion test.

**2.** The thermoplastic composition of claim 1, wherein the composition comprises from greater than 20 wt. % to about 30 wt. % of the PPO.

**3.** The thermoplastic composition of any one of claims 1-2, wherein the composition comprises from about 0.01 wt. % to about 8 wt. % of the compatibilizer package.

**4.** The thermoplastic composition of any one of claims 1-3, wherein the composition comprises from about 30 wt. % to about 45 wt. % of an inorganic filler.

**5.** The thermoplastic composition according to any one of claims 1-4, wherein the compatibilizer package comprises two or more impact modifiers or compatibilizers configured for PPS and PPO.

**6.** The thermoplastic composition according to any one of claims 1-5, wherein the compatibilizer package comprises at least two of a functionalized polyolefin, a styrene-rubber copolymer (SEBS), and an alicyclic saturated hydrocarbon resin.

**7.** The thermoplastic composition according to any one of claims 1-5, wherein the compatibilizer package comprises an ethylene-glycidyl methacrylate co-polymer, an alicyclic saturated hydrocarbon resin, and a styrene ethylene butylene styrene copolymer.

**8.** The thermoplastic composition according to any one of claims 1-5, wherein the compatibilizer package comprises an ethylene-glycidyl methacrylate co-polymer, an alicyclic saturated hydrocarbon resin, and a styrene rubber co-polymer present in a ratio of about 2 : 1.5 : 2.

**9.** The thermoplastic composition according to any one of claims 1-8, wherein the PPS is a linear PPS.

**10.** The thermoplastic composition according to any one of claims 1-9, wherein the composition is free of or substantially free of a carbon filler or a carbon-based filler.

**11.** The thermoplastic composition according to any one of claims 1-10, wherein the composition is free of or substantially free of a laser activatable metal compound.

**12.** The thermoplastic composition according to any one of claims 1-11, wherein the inorganic filler comprises glass fiber, glass flake, talc, clay, mica, wollastonite, titanium dioxide, or a combination thereof.

**13.** The thermoplastic composition according to any one of claims 1-12, wherein the inorganic filler comprises a glass fiber.

**14.** The thermoplastic composition according to any one of claims 1 to 13, wherein the thermoplastic composition further comprises at least one additional additive, wherein the at least one additional additive comprises an acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof.

**15.** An article formed from a composition, wherein the article is an antenna, and the thermoplastic composition comprises:

a. from about 30 wt. % to about 60 wt. % of a polyphenylene sulfide (PPS);
b. from greater than 20 wt. % to about 35 wt. % of a polyphenylene oxide (PPO);
c. from about 0.01 wt. % to about 12 wt. % of a compatibilizer package; and
d. from about 20 wt. % to about 50 wt. % of an inorganic filler,

wherein the combined weight percent value of all components does not exceed 100 wt. %, and all weight percent values are based on the total weight of the composition, and
wherein the composition exhibits a plating adhesion of at least 5B when tested in accordance with ASTM D3359 cross hatch adhesion test.

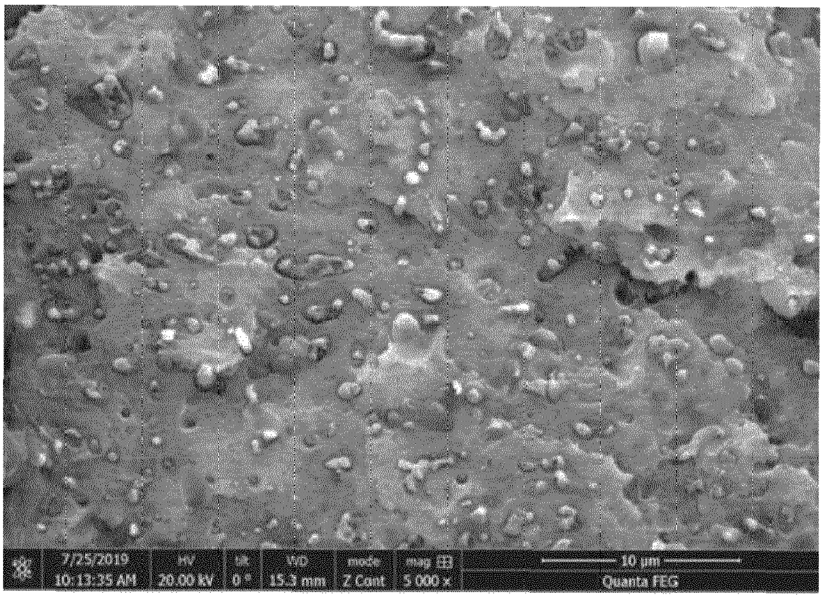
7/25/2019
10:13:35 AM
HV
20.00 kV
tilt
0 °
WD
15.3 mm
mode
Z Cont
mag
5 000 x
10 µm
Quanta FEG

FIG. 1A

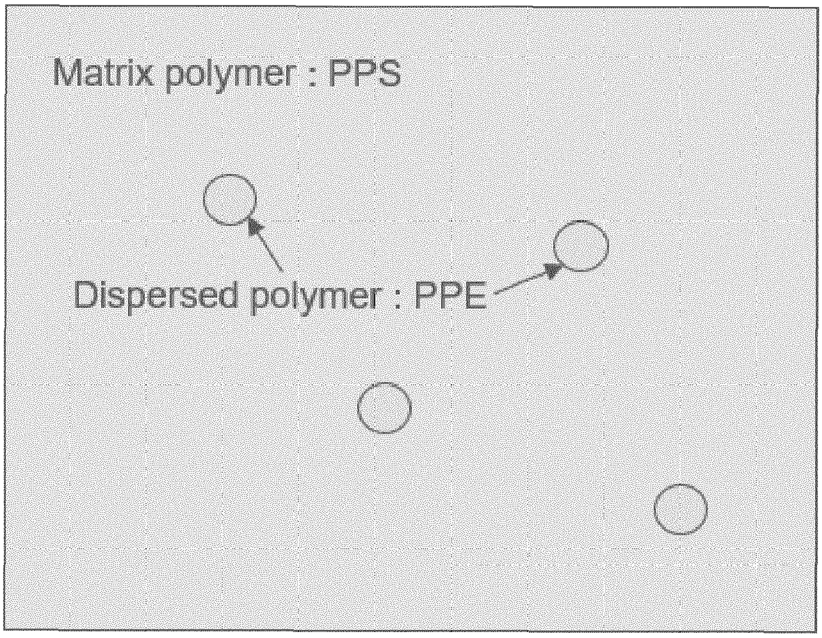
Matrix polymer : PPS
Dispersed polymer : PPE

FIG. 1B

**Table 1.** Raw materials.

| **Description** | **Supplier** | **Trade name** |
| --- | --- | --- |
| Low MW PPS – melt flow rate (MFR) of 450 g/10 min under 316 °C and 5kg loading, by ISO 1133 standard | NHU | 1150C |
| High MW PPS - MFR of 180 g/10min under 316 °C and 5kg loading, by ISO 1133 standard | NHU | 3418 |
| High MW PPO – intrinsic viscosity (IV) of 0.46 dl/g | SABIC | PPO 646 |
| Low MW PPO – IV of 0.40 dl/g | SABIC | PPO 640 |
| Low MW PPO – IV of 0.33 dl/g | SABIC | PPO 630 |
| Impact Modifier/Compatibilizer 1 (IM1) – ethylene glycidyl methacrylate copolymer ; glycidyl methacrylate content of about 19 wt. % of weight of IM1. Compatibilizer configured for PPS | Sumitomo | Igetbond™ E |
| IM2 – alicyclic saturated hydrocarbon. Compatibilizer configured for PPO | Arakawa | Arkon™ P-125 |
| IM3 – styrene ethylene butylene styrene (SEBS) (polystyrene PS block content 30-33%, melt index is 0 at 230 °C/5 kg) | Kraton | G1651 |
| Glass Fiber | CPIC | / |
| (Flat Type) Glass Fiber | Jushi | / |
| Glass Fiber | Jushi | |
| Anti-oxidant 1 | DOVERPHOS | S-9228 |
| Anti-oxidant 2 | BASF | Irganox™ 1010 |
| Mold Release – pentaerythritol stearate | FACI | Glycolube™ (PETS) |

**FIG. 2**

**Table 2.** Typical extrusion profile of compositions.

| **Parameters** | **Unit** | **Extrusion Condition** |
| --- | --- | --- |
| Compounder Type | NONE | TEM-37BS |
| Barrel Size | mm | 1500 |
| Die | mm | 4 |
| Zone 1 Temp | °C | 90 |
| Zone 2 Temp | °C | 220 |
| Zone 3 Temp | °C | 270 |
| Zone 4 Temp | °C | 290 |
| Zone 5 Temp | °C | 310 |
| Zone 6 Temp | °C | 310 |
| Zone 7 Temp | °C | 310 |
| Zone 8 Temp | °C | 320 |
| Zone 9 Temp | °C | 320 |
| Zone 10 Temp | °C | 320 |
| Zone 11 Temp | °C | 320 |
| Die Temp | °C | 320 |
| Screw speed | rpm | 300 |
| Throughput | kg/hr | 30-40 |
| Torque | NONE | 50-60 |
| Vacuum 1 | MPa | -0.08 |
| Side Feeder 1 speed | rpm | 250 |
| Melt temperature | NONE | 290-310 |

**FIG. 3**

**Table 3.** Typical molding profile of compositions.

| **Parameters** | **Unit** | **Molding Condition** |
|---|---|---|
| Cnd: Pre-drying time | Hour | 4 |
| Cnd: Pre-drying temp | °C | 120 |
| Mold Type (insert) | NONE | ISO Tensile, Flexural, Izod bars, Plaques |
| Hopper temp | °C | 50 |
| Zone 1 temp | °C | 290 |
| Zone 2 temp | °C | 320 |
| Zone 3 temp | °C | 320 |
| Nozzle temp | °C | 320 |
| Mold temp | °C | 160 |
| Screw speed | rpm | 100 |
| Back pressure | $kgf/cm^2$ | 30 |
| Cooling time | s | 20-30 |
| Injection speed | mm/s | 100-200 |
| Holding pressure | $kgf/cm^2$ | 600-1000 |
| Max. Injection pressure | $kgf/cm^2$ | 1000-2500 |

**FIG. 4**

**Table 4. Formulations for different PPS/PPO compounds**

| Item Description | Unit | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| 1. High Mw PPO (0.46 dl/g IV) | % | 10 | 0 | 12 | 0 | 12.7 | 20 | 20 | 20 | 20 | 20 | 25 | 30 | - | - | 20 | 20 |
| 2. Low Mw PPS | % | - | - | - | - | 38 | 38 | 32.5 | 0 | 0 | 38 | 33 | 28 | 33 | 38 | 38 | 32.9 |
| 3. Low Mw PPO (0.40 IV) | % | 0 | 10 | 0 | 12 | - | - | - | - | - | - | - | - | - | 20 | | |
| 4. Igetbond E (IM/Compatibilizer 1, IM1) | % | 4.5 | 4.5 | 5 | 5 | 3 | - | 2 | | 2 | - | - | - | - | - | - | 2 |
| 5. G1651 (IM2) | % | 3 | 3 | 3.5 | 3.5 | 2 | - | 1.5 | | 1.5 | - | - | - | - | - | - | 1.5 |
| 6. Olefin Additive (IM3) | % | 4 | 4 | 4 | 4 | 1 | - | 2 | | 2 | - | - | - | - | - | - | 2 |
| 7. Noryl GF | % | 40 | 40 | 35 | 35 | 43 | 42 | 42 | 42 | 42 | 42 | 42 | 42 | 42 | 42 | 0 | - |
| 8. High Mw PPS | % | 38.2 | 38.2 | 40.2 | 40.2 | - | - | - | 38 | 32.5 | - | - | - | - | - | - | - |
| 9. Mold Release | % | 0.3 | 0.3 | 0.3 | 0.3 | 0.3 | - | - | - | - | - | - | - | - | - | - | - |
| 10. High Mw PPO 0.46 IV | % | - | - | - | - | - | - | - | - | - | - | - | - | 25 | - | - | - |
| 11. Glass Fiber | % | - | - | - | - | - | - | - | - | - | - | - | - | - | - | 42 | - |
| 12. Flat Glass Fiber | % | - | - | - | - | - | - | - | - | - | - | - | - | - | - | - | 41 |
| 13. MR (PETS) | % | - | - | - | - | - | - | - | - | - | - | - | - | - | - | - | 0.2 |
| 14. AO1 S-9228 | % | - | - | - | - | - | - | - | - | - | - | - | - | - | - | - | 0.2 |
| 15. AO2 1010 | % | - | - | - | - | - | - | - | - | - | - | - | - | - | - | - | 0.2 |

FIG. 5

**Table 7.** Plating values for formulations with varying molecular weight of PPS and PPE

| | PPS (Low MW) | PPS (High MW) | PPE (Low MW) | PPE (High MW) | GF | HDT (°C) | TM (GPa) | Charpy (kJ/m$^2$) | Plating |
|---|---|---|---|---|---|---|---|---|---|
| **Ref** | 57 | | | | 41 | 270 | 16.0 | 10.0 | Fail |
| **6** | | 38 | 20 | | 42 | 273 | 13.7 | 7.4 | Fail |
| **8** | | 38 | | 20 | 42 | 270 | 14.0 | 5.8 | Fail |
| **10** | 38 | | | 20 | 42 | 276 | 14.4 | 8 | Fail |
| **14** | 38 | | 20 | | 42 | 277 | 14.3 | 7.5 | Fail |

**FIG. 6**

**Table 8**. Plating properties for samples at 20, 25, and 30 wt. % PPE.

| Sample | PPS | PPE | IM | GF | HDT (°C) | TM (GPa) | Charpy ($kJ/m^2$) | Plating |
|---|---|---|---|---|---|---|---|---|
| **6** | 38 | 20 | - | 42 | 273 | 13.7 | 7.4 | Fail |
| **11** | 33 | 25 | - | 42 | 273 | 14.1 | 7.3 | OK |
| **12** | 28 | 30 | - | 42 | 267 | 14.0 | 7.2 | OK |

**FIG. 7**

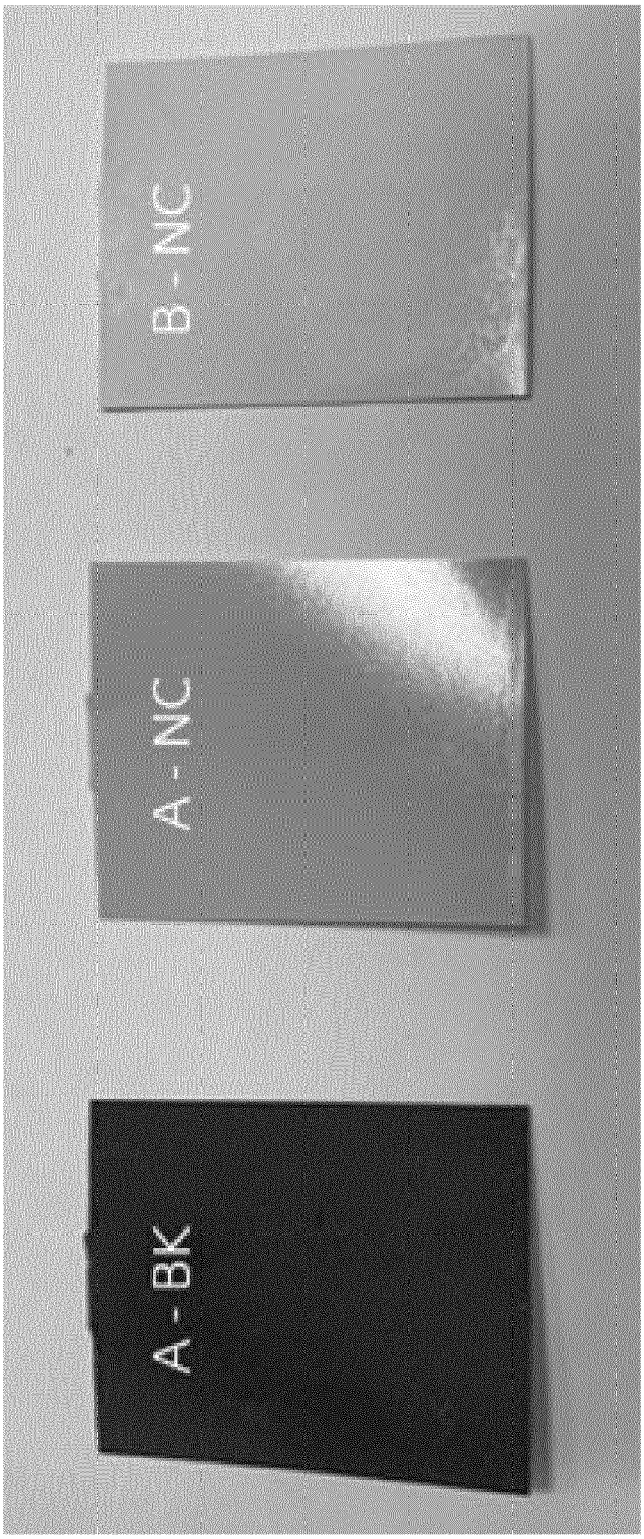


FIG. 8

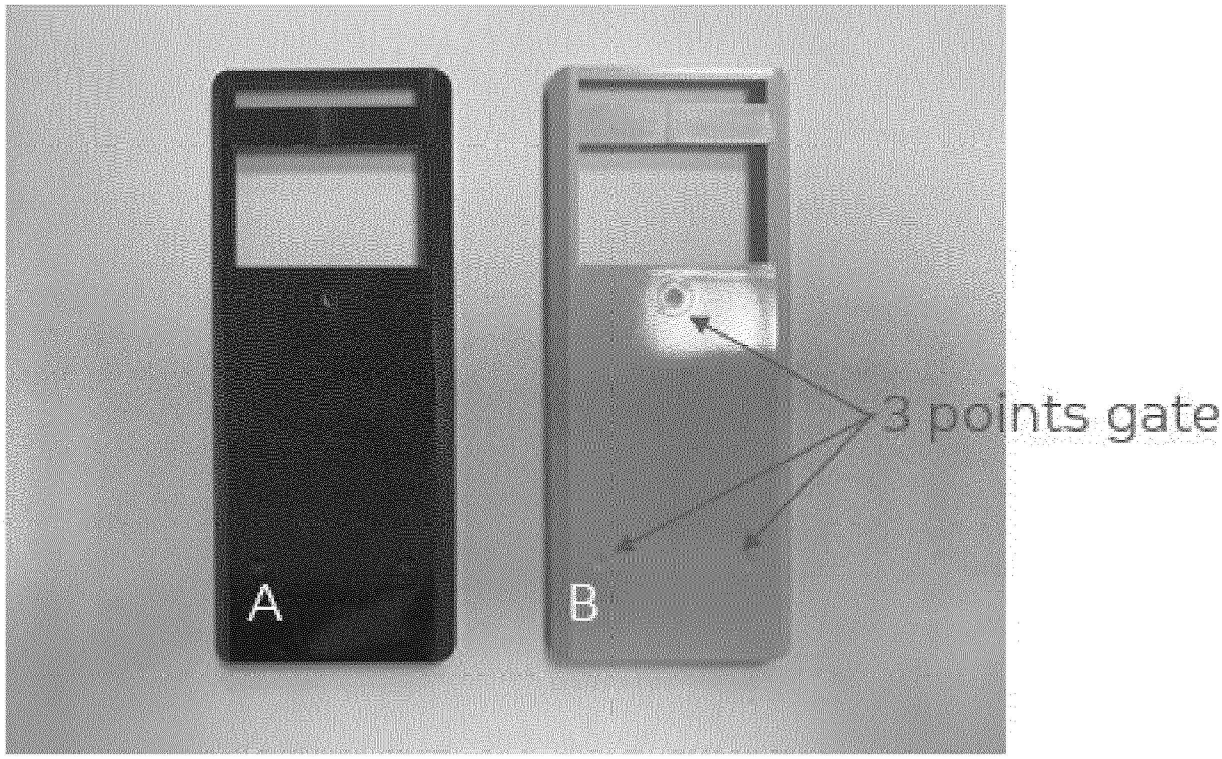


FIG. 9

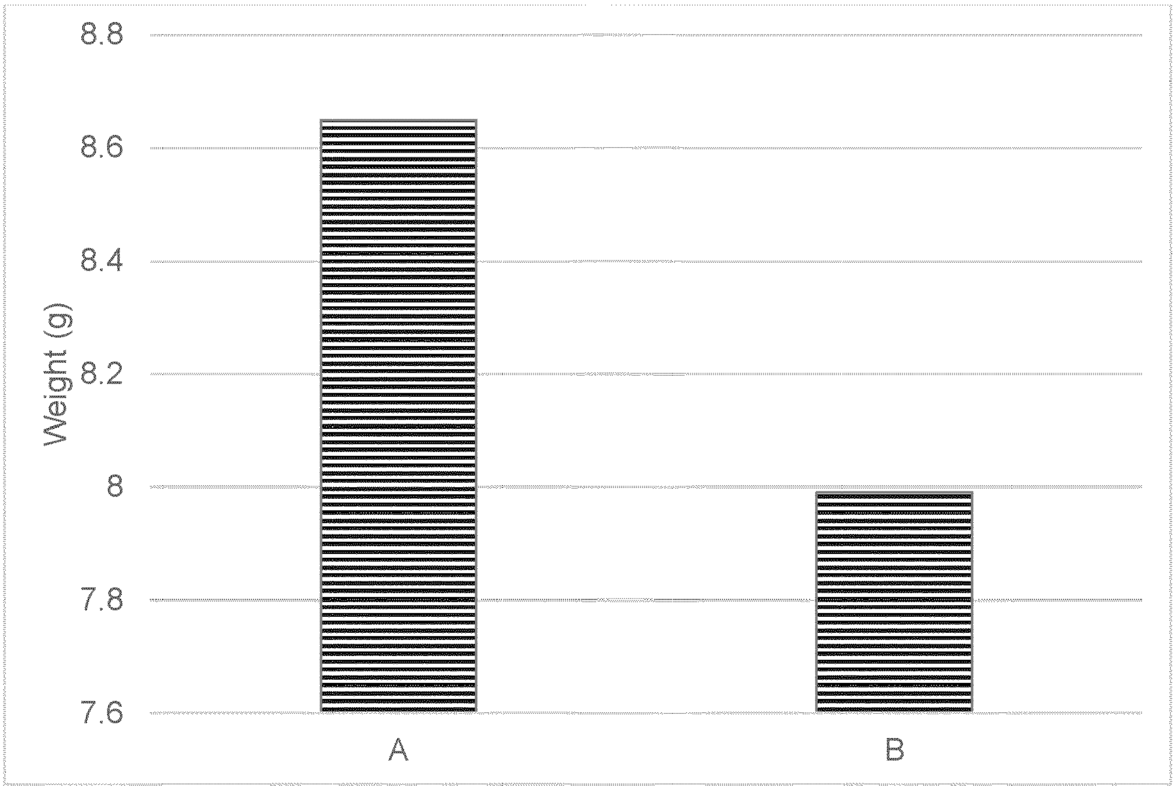


**FIG. 10**

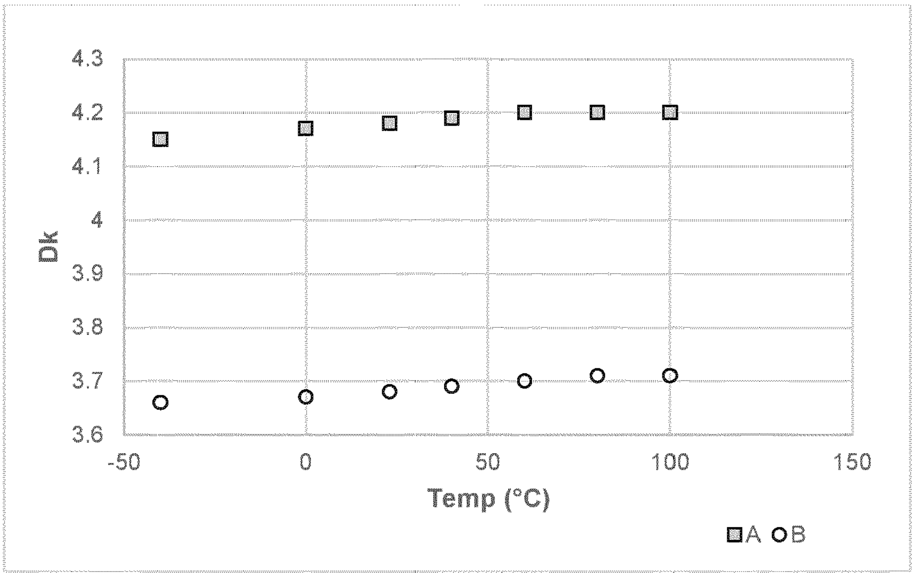


FIG. 11A

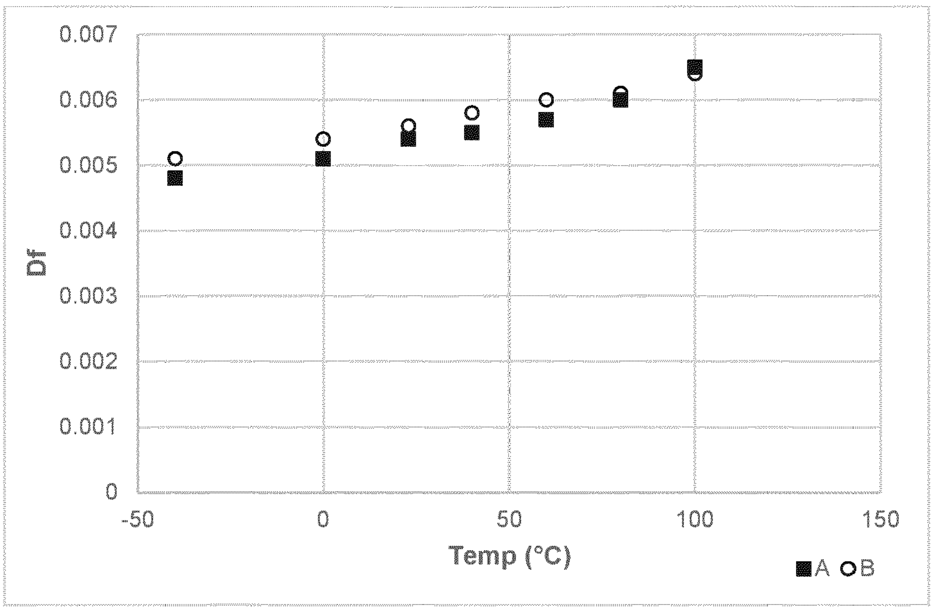


FIG. 11B

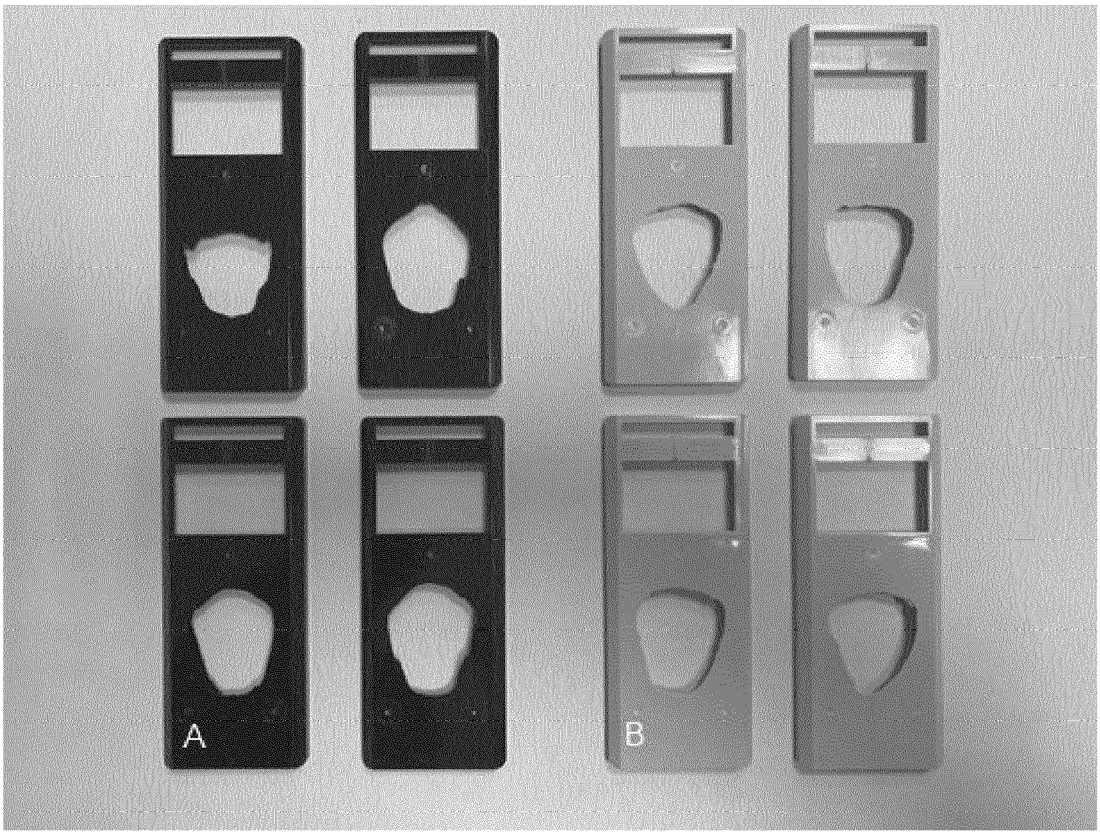


FIG. 12

Europäisches Patentamt
European Patent Office
Office européen des brevets

# EUROPEAN SEARCH REPORT

Application Number
EP 21 18 8852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 430 102 A (GLASER RAYMOND H [US] ET AL) 4 July 1995 (1995-07-04)<br>* column 1, line 6 - column 10, line 48; claims 1-25; examples *<br>----- | 1-15 | INV.<br>C08K3/00<br>C08L23/00<br>C08L53/00<br>C08L71/02<br>C08L71/12<br>C08L81/02 |
| X | US 5 840 793 A (GLASER RAYMOND H [US] ET AL) 24 November 1998 (1998-11-24)<br>* column 1, line 9 - column 11, line 40; claims 1-23; examples *<br>----- | 1-15 | |
| X,D | CN 108 264 767 A (SHENZHEN HALCYON NEW MAT CO LTD) 10 July 2018 (2018-07-10)<br>* paragraph [0001] - paragraph [0042]; claims 1-10; examples *<br>----- | 1-15 | |
| X,D | CN 103 013 118 A (ZHANG GUOQING; ZENG YONGBIN) 3 April 2013 (2013-04-03)<br>* paragraph [0001] - paragraph [0023]; claims 1-9; examples *<br>----- | 1-15 | |
| X,D | CN 102 977 603 A (GUANGDONG WAYLAM ENGINEERING PLASTICS CO LTD) 20 March 2013 (2013-03-20)<br>* paragraph [0001] - paragraph [0029]; claims 1-9; examples *<br>----- | 1-15 | TECHNICAL FIELDS SEARCHED (IPC)<br>C09J<br>C08K<br>C08L |
| X,D | CN 103 788 654 A (POLYMER SCI ANHUI NEW MAT CO) 14 May 2014 (2014-05-14)<br>* paragraph [0001] - paragraph [0019]; claims 1-11; examples *<br>----- | 1-15 | |

1 The present search report has been drawn up for all claims

| Place of search | Date of completion of the search | Examiner |
|---|---|---|
| The Hague | 8 February 2022 | Kiebooms, Rafaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 18 8852

This annex lists the patent family members relating to the patent documents cited in the above-mentioned European search report. The members are as contained in the European Patent Office EDP file on
The European Patent Office is in no way liable for these particulars which are merely given for the purpose of information.

08-02-2022

| Patent document cited in search report | | Publication date | Patent family member(s) | Publication date |
|---|---|---|---|---|
| US 5430102 | A | 04-07-1995 | NONE | |
| US 5840793 | A | 24-11-1998 | NONE | |
| CN 108264767 | A | 10-07-2018 | NONE | |
| CN 103013118 | A | 03-04-2013 | NONE | |
| CN 102977603 | A | 20-03-2013 | NONE | |
| CN 103788654 | A | 14-05-2014 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 108264767 A
- CN 103013118 A
- CN 102977603 B
- CN 103788654 A